# EUROPÄISCHE PATENTSCHRIFT

(11) **EP 2 437 036 B1**
(45) Veröffentlichungstag und Bekanntmachung des Hinweises auf die Patenterteilung: **10.02.2016**
(21) Anmeldenummer: 11007094.3
(22) Anmeldetag: 01.09.2011
(51) Int. Cl.: G01F 1/32, G01F 1/36, G01F 22/02, G01F 23/00, G01F 25/00

(54) **Messeinrichtung und Verfahren zum Ermitteln eines Flüssigkeitsfüllstands in einem Kraftstofftank**
Measuring device and method for determining a fluid level in a fuel tank
Dispositif de mesure et procédé d'établissement d'un niveau de remplissage de liquide dans un réservoir à carburant

(30) Priorität: 13.09.2010 DE 102010045212
(43) Veröffentlichungstag der Anmeldung: 04.04.2012
(73) Patentinhaber: Audi AG, 85045 Ingolstadt (DE)
(72) Erfinder: Hagen, Harald, 95473 Creussen (DE)
(74) Vertreter: Lehle, Josef

(56) Entgegenhaltungen:
- EP-A2- 1 437 579
- GB-A- 2 293 013
- JP-A- 5 264 319
- JP-A- 2004 212 249
- US-A1- 2006 157 146

## Beschreibung

Die Erfindung betrifft eine Messeinrichtung zum Ermitteln eines Flüssigkeitsfüllstands in einem Kraftstofftank für ein Fahrzeug. Sie umfasst einen Schwimmkörper und eine an dem Kraftstofftank festlegbare Signalerzeugungseinheit. Hierbei ist eine Position des Schwimmkörpers relativ zu der Signalerzeugungseinheit in ein Signal umsetzbar, das mit dem Füllstand des undeformierten Kraftstofftanks korreliert. Die Messeinrichtung umfasst eine Korrektureinrichtung zum Korrigieren des Signals, die zum Erfassen einer Deformation des Kraftstofftanks durch Erfassen eines Ausmaßes der Deformation oder einer das Ausmaß bestimmenden Größe ausgelegt ist. Des Weiteren betrifft die Erfindung ein Verfahren zum Ermitteln eines Flüssigkeitsfüllstands in einem Kraftstofftank.

Die GB 2 293 013 A beschreibt einen Füllstandssensor für einen Kraftstofftank eines Fahrzeugs, welcher einen an einem Arm befestigten Schwimmkörper umfasst. An einer Halterung für den Arm ist auch ein Kompensationsarm schwenkbar angeordnet, welcher gegen einen Boden des Kraftstofftanks gedrückt wird. Mit dem Arm und dem Kompensationsarm verbundene Korntakte bewegen sich entlang Widerstandsstrecken, wenn sich der Boden des Kraftstofftanks verformt. Die Widerstandsstrecken sind elektrisch parallel geschaltet. Durch Auswertung des Gesamtwiderstands der Widerstandsstrecken wird auf den Füllstand rückgeschlossen. Fehler, welche auf einer Verformung des Bodens des Kraftstofftanks beruhen, werden so kompensiert.

Die JP 5 264 319 A beschreibt eine Messeinrichtung, mittels welcher die Ölmenge in einem Erdtank bestimmt wird. Über eine Zuleitung wird der Erdtank mit Öl aus einem Tankwagen befüllt, wobei die durch die Zuleitung strömenden Mengen mit sehr hoher Genauigkeit erfasst werden. Von einem Füllstandssensor erfasste Füllhöhen werden jeweiligen Füllmengen zugeordnet, welche anhand der tatsächlich zugeführten Füllmengen korrigiert werden. Hier wird also durch hoch genaues Befüllen des Erdtanks der Füllstandssensor kalibriert und so eine Deformation des Erdtanks berücksichtigt.

Die JP 2004 212 249 A beschreibt einen Füllstandsmesser mit einem Schwimmkörper, welcher über einen Arm an einem Rotationsdetektor befestigt ist. An einer Drehscheibe des Rotationsdetektors ist eine an einem Boden eines Tanks abgestützte Strebe gelagert. Eine Deformation des Bodens des Tanks wird anhand der Rotation der Drehscheibe festgestellt. Über ein Getriebe wird dann die mittels des Schwimmkörpers erfasste Füllhöhe im Tank korrigiert.

Bei der EP 1 437 579 A2 wird eine Deformation eines Bodens eines Kraftstofftanks mittels eines Viergelenk-Hebelmechanismus derart kompensiert, dass bei einer deformationsbedingten Bewegung des Bodens keine Änderung der Füllstandsanzeige auftritt. Der Füllstand wird hierbei mittels eines Schwimmkörpers erfasst, der über eine Strebe mit dem Viergelenk-Hebemechanismus gekoppelt ist.

Die US 2006/0157 146 A1 beschreibt ein Verfahren zum Ausgleichen einer Bestandsaufnahme bei der Kraftstoffverteilung. Eine Kraftstoffquelle kann hierbei eine Messeinrichtung aufweisen, welche die Temperatur, das Volumen und die Dichte des Kraftstoffs erfasst. Herstellerangaben, welche die Füllhöhe in einem Tank in Beziehung zum Füllvolumen setzen, werden hierbei durch Messungen kalibriert, welche berücksichtigen, ob der Tank gekippt oder deformiert ist.

Die DE 44 26 686 A1 beschreibt eine Füllstandsmesseinrichtüng für einen Kraftstofftank eines Kraftfahrzeugs, bei welchem ein Halter für ein Potentiometer am Kraftstofftank befestigt ist. Eine Widerstandsbahn des Potentiometers ist an einem Hebelarm angeordnet, welcher um eine Schwenkachse schwenkbar an dem Halter für das Potentiometer befestigt ist. An einem Schwimmerarm des Potentiometers sind ein Schwimmkörper und ein Schleifer angeordnet, welcher mit der Widerstandsbahn in Kontakt ist. Bei einer Winkeländerung zwischen Schwimmerarm und Hebelarm ändert sich der über den Schleifer an der Widerstandsbahn abgegriffene Widerstandswert, welcher herangezogen wird, um auf einer Anzeige den Füllstand des Kraftstofftanks darzustellen. Der Schwimmerarm ist ebenfalls um eine Schwenkachse schwenkbar an dem Hebelarm befestigt, wobei die Schwenkachsen des Hebelarms und des Schwimmerarms parallel zueinander ausgerichtet sind. Bei einer Neigung des Halters ändert sich daher sowohl die Relativlage des Hebelarms als auch des Schwimmerarms zu dem Halter. Änderungen des Winkels zwischen dem Schwimmerarm und dem Hebelarm werden folglich durch Änderungen des Flüssigkeitsstands im Kraftstofftank verursacht. Eine Neigung des Halters aufgrund einer Fahrt auf einer Gefällestrecke oder aufgrund einer Deformation des Kraftstofftanks soll hierbei nicht zu einer falschen Füllstandsanzeige führen.

Die DE 39 26 552 C2 beschreibt ebenfalls einen nach Art eines Potentiometers arbeitenden Füllstandssensor. Hierbei ist der Füllstandssensor an einen Tankflansch befestigt, wobei eine Sensoreinheit über im rechten Winkel sich kreuzende Stege mit Spiel in einem Gehäuse des Füllstandssensors geführt ist. Durch eine untere Öffnung in dem Gehäuse tritt eine Stützstange hindurch, welches am Boden des Kraftstofftanks federbelastet abgestützt ist. Die Stützstange ist ebenfalls mit Spiel in der Öffnung bewegbar. Wenn der Tankflansch mit einer Winkelabweichung von seiner Solllage am Kraftstofftank befestigt wird, kann dies durch eine Relativbewegung der Stege und der Stützstange zu dem Gehäuse des Füllstandssensors ausgeglichen werden. Eine Montage des Flansches am Kraftstofftank, die nicht gemäß der Solllage erfolgt, soll sich so nicht auf die Messgenauigkeit des Füllstandssensors auswirken.

Durch Deformationen des Kraftstofftanks oder durch ein Verkippen von Komponenten der Messeinrichtung bewirkte besonders ungünstige Relativlagen des Schwimmkörpers zu der Signalerzeugungseinheit können jedoch bei den aus dem Stand der Technik bekannten Messeinrichtungen dennoch zu falschen Füllstandsanzeigen führen.

Darüber hinaus können sich auch bei Messeinrichtungen, bei welchen der Schwimmkörper nicht mechanisch mit der an dem Kraftstofftank festgelegten Signalerzeugungseinheit gekoppelt ist, Deformationen des Kraftstofftanks einstellen, welche dann zu einer ungenauen Anzeige des Flüssigkeitsfüllstands im Kraftstofftank führen.

Aufgabe der vorliegenden Erfindung ist es daher, eine Messeinrichtung der eingangs genannten Art sowie ein entsprechendes Verfahren zu schaffen, welche beziehungsweise welches ein verbessertes Ermitteln des Flüssigkeitsfüllstands im Kraftstofftank ermöglicht.

Diese Aufgabe wird durch eine Messeinrichtung mit den Merkmalen des Patentanspruchs 1 und durch ein Verfahren mit den Merkmalen des Patentanspruchs 7 gelöst. Vorteilhafte Ausgestaltungen mit zweckmäßigen Weiterbildungen sind in den abhängigen Patentansprüchen angegeben.

Die erfindungsgemäße Messeinrichtung umfasst eine Korrektureinrichtung zum Korrigieren des Signals, wobei die Korrektureinrichtung zum Erfassen einer Deformation des Kraftstofftanks ausgelegt ist. Der Erfindung liegt die Erkenntnis zugrunde, dass das von der Signalerzeugungseinheit erzeugte Signal, welches mit dem Füllstand des undeformierten Kraftstofftanks korreliert, durch eine Deformation des Kraftstofftanks zum Anzeigen eines Füllstands führen kann, welcher von dem tatsächlichen Füllstand stark abweicht. Dies gilt insbesondere, wenn der Kraftstofftank als Drucktank ausgebildet ist, also als geschlossener Tank, welcher nicht über eine (üblicherweise mit einem Aktivkohlefilter versehene) ständig offene Leitung mit der Umgebung kommuniziert.

Jedoch auch bei einem Kraftstofftank, welcher über eine solche, mit dem Aktivkohlefilter versehene Leitung mit der Umgebung in Verbindung steht, kann es aufgrund von Temperaturänderungen zu einem geringfügigen Unterdruck oder Überdruck im Inneren des Kraftstofftanks bezogen auf den Umgebungsdruck kommen.

Bei einem geschlossenen Drucktank ist jedoch die mit dem Unterdruck oder dem Überdruck einhergehende Deformation des Kraftstofftanks von besonders großer Bedeutung, so dass hier das Erfassen der Deformation des Kraftstofftanks und das Korrigieren des Signals mittels der Korrektureinrichtung besonders vorteilhaft zum Einsatz kommen kann.

Die erfindungsgemäße Messeinrichtung ermöglicht ein verbessertes, da die Deformation des Kraftstofftanks berücksichtigendes Ermitteln des Flüssigkeitsfüllstands in dem Kraftstofftank etwa bei der Verwendung von Signalerzeugungseinheiten, bei welchen der Schwimmkörper mechanisch mit dieser gekoppelt ist. Die Messeinrichtung ist jedoch auch bei Systemen verwendbar, bei welchen der Schwimmkörper berührungslos mit einer am Kraftstofftank ortsfest gehaltenen Signalerzeugungseinheit in Wechselwirkung steht. Bei einer solchen Signalerzeugungseinheit kann es sich insbesondere um eine Reed-Schalter aufweisende Messplatine oder um eine infolge der Bewegung des Schwimmkörpers Änderungen der Kapazität erfassende Elektrode handeln.

Dadurch, dass vorliegend das Signal der Signalerzeugungseinheit korrigiert wird, kann auf aufwändige Vorkehrungen zur deformationsausgleichenden Lagerung von Komponenten der Signalerzeugungseinheit, wie sie aus dem Stand der Technik bekannt sind, verzichtet werden.

Das Korrigieren des Signals aufgrund der erfassten Deformation des Kraftstofftanks verhindert zuverlässig, dass ein falscher Flüssigkeitsfüllstand angezeigt wird. Ist der Kraftstofftank in einem Fahrzeug angeordnet, kann so in vorteilhafter Weise verhindert werden, dass das Fahrzeug liegen bleibt, weil der tatsächlich vorhandene Kraftstoff lediglich für eine geringere Fahrstrecke ausreicht als es laut der Füllstandsanzeige den Anschein hat.

Hierbei ist die Korrektureinrichtung zum Erfassen eines Ausmaßes der Deformation oder einer das Ausmaß bestimmenden Größe ausgelegt. Dies ermöglicht eine besonders genaue Kompensation einer durch die Deformation des Kraftstofftanks bedingten Verzerrung des von der Signalerzeugungseinheit erzeugten Signals.

Gemäß der Erfindung umfasst die Korrektureinrichtung wenigstens einen Drucksensor zum Erfassen eines Dampfdrucks im Kraftstofftank. Über den Dampfdruck im Kraftstofftank kann auf die Größe der druckabhängigen Deformation des Kraftstofftanks rückgeschlossen werden. Der Drucksensor kann insbesondere bei einem Kraftstofftank zum Einsatz kommen, bei welchem eine Abweichung vom Normaldruck zu einer erheblichen Deformation des Kraftstofftanks führt, etwa bei einem Kraftstofftank aus Kunststoff. Es kann jedoch auch bei einem Kraftstofftank aus einem Metall, insbesondere aus einem Stahl, über das Erfassen des Dampfdrucks im Kraftstofftank eine Aussage über die druckabhängige Deformation des Kraftstofftanks getroffen werden. Die druckabhängige Deformation kann spezifisch für den Typ des jeweiligen Kraftstofftanks, also abhängig vom Material, dem Nennvolumen und der Form ermittelt werden.

Die Korrektureinrichtung umfasst zusätzlich oder alternativ wenigstens einen Temperatursensor zum Erfassen einer Temperatur des Kraftstofftanks. Dadurch können temperaturbedingte Materialausdehnungen oder Schrumpfungen berücksichtigt werden: Dies ist insbesondere dann vorteilhaft, wenn der Kraftstofftank aus einem Kunststoff gebildet ist, welcher einen größeren Ausdehnungskoeffizienten aufweist als ein Stahltank.

Die Korrektureinrichtung umfasst zusätzlich oder alternativ wenigstens einen Wegaufnehmer zum Erfassen einer Längenänderung, so kann die tatsächliche Deformation des Kraftstofftanks besonders gut berücksichtigt werden. Hierbei spielt es dann keine Rolle, ob die Deformation druck- und/oder temperaturbedingt ist.

Die Messeinrichtung kann eine Steuerungseinrichtung zum Ansteuern einer Anzeige umfassen, wobei in der Steuerungseinrichtung zumindest eine Kennlinie abgelegt ist, welche wenigstens einen von der Größe der Deformation des Kraftstofftanks abhängigen Korrekturwert zum Korrigieren des Signals der Signalerzeugungseinheit angibt. Die Kennlinie kann dann von der Steuerungseinrichtung dazu herangezogen werden, das aufgrund der Deformation des Kraftstofftanks nicht den tatsächlichen Flüssigkeitsfüllstand angebende Signal der Signalserzeugungseinheit zu korrigieren. Bei einer solchen Messeinrichtung brauchen keinerlei Änderungen an der Signalerzeugungseinheit vorgenommen zu werden, so dass eine einfache Möglichkeit der Nachrüstung einer bestehenden Messeinrichtung gegeben ist.

Es hat sich als vorteilhaft gezeigt, wenn der wenigstens eine Drucksensor in dem Kraftstofftank angeordnet und mit der Steuerungseinrichtung gekoppelt ist. In der Steuerungseinrichtung findet dann die Verarbeitung des von der Signalerzeugungseinheit erzeugten und aufgrund der Deformation des Kraftstofftanks nicht den tatsächlichen Flüssigkeitsfüllstand angebenden Signals und des vom Drucksensor gelieferten Signals statt. Insbesondere wenn ohnehin ein Drucksensor vorgesehen ist, um den Druck im Kraftstofftank zu überwachen, kann das von diesem gelieferte Signal besonders einfach zur Korrektur des von der Signalerzeugungseinheit gelieferten Signals herangezogen werden. Hierfür braucht dann lediglich in der Steuerungseinrichtung die für den Typ des Kraftstofftanks spezifische Kennlinie abgelegt und die Steuerungseinrichtung zur Verarbeitung beider Signale ausgelegt zu werden.

Ergänzend oder alternativ kann der wenigstens eine Drucksensor in die Signalerzeugungseinheit oder in den Schwimmkörper - oder auch in ein die Signalerzeugungseinheit mit dem Schwimmkörper koppelndes Koppelelement - integriert sein. Hierbei ist dann mittels der Signalerzeugungseinheit ein korrigiertes Signal über eine Signalstrecke der Signalerzeugungseinheit an die Steuerungseinrichtung übermittelbar. Es braucht dann in der Steuerungseinrichtung keine zum Korrigieren des Signals vorgesehene Kennlinie abgelegt zu sein, da von der Signalerzeugungseinheit direkt das mittels des Drucksensors korrigierte Signal an die Steuerungseinrichtung übermittelt wird. Ein solcher Drucksensor kann eine - etwa an dem Schwimmkörper oder an der Signalerzeugungseinheit - angeordnete Membran umfassen, deren druckabhängige Auslenkung eine Messgröße liefert, welche das von der Signalerzeugungseinheit erzeugte Signal korrigiert. Hier braucht dann die Steuerungseinrichtung keine Auswertung von zwei Signalen vorzunehmen, sondern das gelieferte Signal kann direkt umgesetzt werden, um die Anzeige zum Anzeigen des Flüssigkeitszustands anzusteuern. Bei dieser Ausgestaltung der Erfindung brauchen also an einer lediglich zum Verarbeiten des Signals der Signalerzeugungseinheit ausgelegten Steuerungseinrichtung keine Änderungen vorgenommen zu werden, um ein korrektes Ansteuern der Anzeige sicherzustellen.

Bei Verwendung des Temperatursensors zusätzlich zu einem Drucksensor der Korrektureinrichtung kann eine in der Steuerungseinrichtung abgelegte Kennlinie beide Größen, nämlich den Druck und die Temperatur, beim Angeben eines Korrekturwerts zum Korrigieren des Signals der Signalerzeugungseinheit berücksichtigen.

Auch bei Verwendung des Wegaufnehmers kann eine in der Steuerungseinrichtung abgelegte Kennlinie die Längenänderung beim Angeben eines Korrekturwerts zum Korrigieren des Signals der Signalerzeugungseinheit berücksichtigen. Wenigstens ein Wegaufnehmer kann auch zusätzlich zu einem Drucksensor und/oder einem Temperatursensor der Korrektureinrichtung vorgesehen sein.

Wenn wenigstens ein Wegaufnehmer mit der Signalerzeugungseinheit einerseits und einer Wand des Kraftstofftanks andererseits gekoppelt ist, kann auch eine sich von einer Soll-Lage unterscheidende Ist-Lage der Signalerzeugungseinheit in dem Kraftstofftank erfasst und beim Korrigieren des Signals der Signalerzeugungseinheit berücksichtigt werden. Hierbei spielt es keine Rolle, ob die erfasste Ist-Lage davon abhängt, ob der Kraftstofftank einer Druck- und/oder einer Temperaturbelastung ausgesetzt ist. Vielmehr können auch eine auf einer mechanischen Beanspruchung beruhende Deformation oder ein Verkippen von Komponenten der Messeinrichtung erfasst und verarbeitet werden.

Schließlich hat es sich als vorteilhaft gezeigt, wenn die Korrektureinrichtung zum Korrigieren des Signals bei einer durch einen Überdruck und/oder einen Unterdruck bedingten Deformation des Kraftstofftanks ausgelegt ist. Damit kann dem Umstand Rechnung getragen werden, dass es bei einem Unterdruck zu einer anderen Verformung des Kraftstofftanks kommen kann als bei einem Überdruck. Bei dem Unterdruck kann der Druck im Kraftstofftank um bis zu 100 mbar unter dem Umgebungsdruck liegen, bei dem Überdruck um bis zu 300 mbar über diesem.

Bei dem erfindungsgemäßen Verfahren zum Ermitteln eines Flüssigkeitsfüllstands in einem Kraftstofftank für ein Fahrzeug gibt eine Signalerzeugungseinheit ein den Flüssigkeitsfüllstand angebendes Signal ab. Hierbei wird eine Deformation eines Kraftstofftanks erfasst und aufgrund der erfassten Deformation das Signal korrigiert. So kann sichergestellt werden, dass der tatsächlich angezeigte Flüssigkeitsfüllstand nicht durch eine Deformation des Kraftstofftanks verfälscht wird. Die Deformation des Kraftstofftanks wird durch eine Korrektureinrichtung erfasst und korrigiert. Die Korrektureinrichtung erfasst ein Ausmaß der Deformation oder eine das Ausmaß bestimmende Größe. Sie erfasst hierbei mittels eines Drucksensors einen Dampfdruck im Kraftstofftank, mittels eines Temperatursensors eine Temperatur des Kraftstofftanks und/oder mittels eines Wegaufnehmers eine Längenänderung.

Die für die erfindungsgemäße Messeinrichtung beschriebenen Vorteile und bevorzugten Ausführungsformen gelten auch für das erfindungsgemäße Verfahren zum Ermitteln eines Flüssigkeitsfüllstands.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: schematisch einen undeformierten Kraftstofftank für ein Fahrzeug, mit einem Füllstandsmesser, wobei ein Schwimmer desselben über einen Arm mit einem Signalgeber gekoppelt ist;
- Fig. 2: schematisch eine durch einen Unterdruck bedingte Verformung des Kraftstofftanks, wobei eine Winkellage des Arms zu dem Signalgeber aufgrund der Deformation verändert ist;
- Fig. 3: schematisch eine Veränderung der Winkellage des Arms, welche durch eine auf einem Überdruck im Tank beruhende Verformung bedingt ist;
- Fig. 4: eine Veränderung der Winkellage des Arms, bei welcher aufgrund einer Veränderung des Drucks im Kraftstofftank dieser deformiert ist und folglich die Position des Signalgebers von seiner Soll-Position abweicht; und
- Fig. 5: eine Höhen-Volumenkennlinie, welche die Abhängigkeit der von dem Signalgeber angegebenen Füllhöhe vom im Kraftstofftank vorhandenen Kraftstoffvolumen angibt, wobei Ist-Kurven so korrigiert werden, dass sie einer Soll-Kurve angeglichen werden.

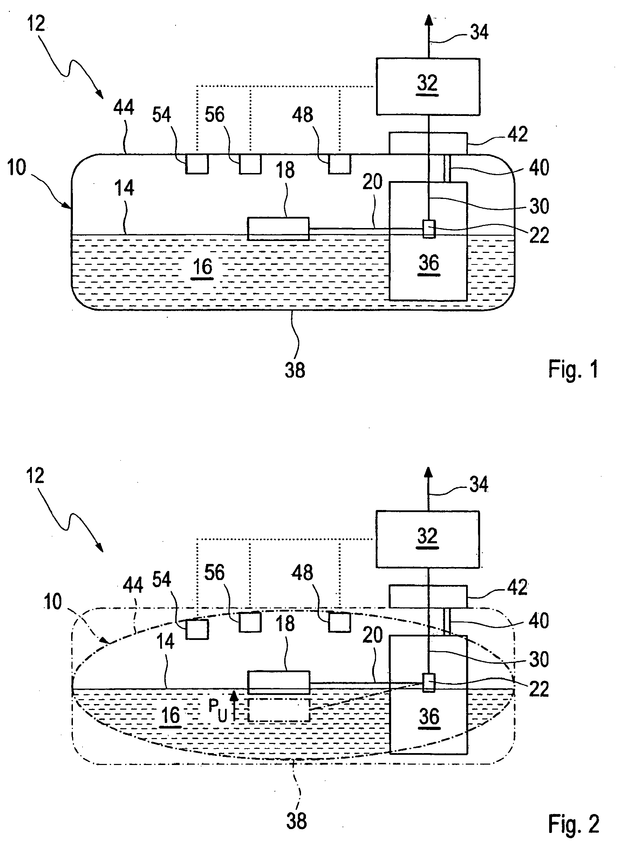

Fig. 1 zeigt schematisch einen Kraftstofftank 10 sowie eine Messeinrichtung 12 zum Ermitteln eines Füllstands 14 des Kraftstoffs 16 in dem Kraftstofftank 10. Der Kraftstofftank 10 ist als Drucktank eines Fahrzeugs ausgebildet, also als geschlossener Tank, welcher nicht über eine ständig offene Entlüftungsleitung mit der Umgebung des Kraftstofftanks 10 in Verbindung steht. Ein solcher Drucktank kann insbesondere bei einem Hybridfahrzeug zum Einsatz kommen. Bei einem Hybridfahrzeug soll nämlich auch dann verhindert werden, dass gasförmiger Kraftstoff in die Umgebung austritt, wenn der Verbrennungsmotor des Kraftfahrzeugs über längere Zeit nicht in Betrieb ist und so Kraftstoffdämpfe nicht über ihr Verbrennen im Verbrennungsmotor entsorgt werden können. Ein solcher Drucktank kann besonders günstig aus Kunststoff gefertigt sein.

Die Messeinrichtung 12 umfasst einen auf dem Kraftstoff 16 aufschwimmenden Schwimmkörper 18, welcher über einen Arm 20 mit einem Signalgeber 22 gekoppelt ist. Die sich mit veränderndem Füllstand 14 in dem Kraftstofftank 10 verändernde Winkellage des Arms 20 in Bezug auf den Signalgeber 22 wird in ein elektrisches Signal, beispielsweise einen Widerstandswert, umgesetzt. Der Widerstandswert gibt dann bei nicht deformiertem Kraftstofftank 10 an, wie viel Kraftstoff 16 sich in dem Kraftstofftank 10 befindet.

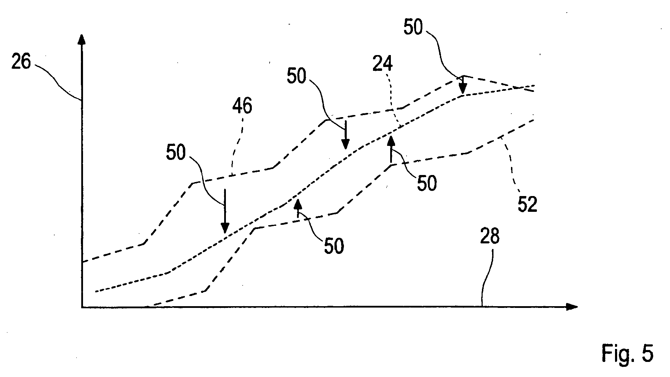

Eine entsprechende Kennlinie für den undeformierten Kraftstofftank 10 ist in Fig. 5 als Soll-Kurve 24 in einem Koordinatensystem angegeben, in welchem auf der Ordinate 26 die Füllhöhe und auf der Abszisse 28 das tatsächliche Füllvolumen des Kraftstoffs 16 im Kraftstofftank 10 angegeben ist. Die Füllhöhe wird dazu herangezogen, auf einer Tankanzeige des Fahrzeugs ein (absolutes oder relatives) Anzeigevolumen oder eine Reichweite darzustellen.

Der Signalgeber 22 übermittelt hierfür das elektrische Signal über eine Signalstrecke 30 an ein Steuergerät 32, welches wiederum die (nicht gezeigte) Tankanzeige in einem Kombinationsinstrument des Kraftwagens ansteuert, wie dies in Fig. 1 durch einen Pfeil 34 veranschaulicht ist.

Der Signalgeber 22 ist vorliegend an einer Fördereinheit 36 angeordnet, welche über eine (nicht gezeigte) Stütze federbelastet am Boden 38 des Kraftstofftanks 10 abgestützt ist. Von der Fördereinheit 36 führt eine Leitung 40 über einen.Tankflansch 42 aus dem Kraftstofftank 10 heraus und zu einem (nicht gezeigten) Verbrennungsmotor des Fahrzeugs.

Fig. 2 zeigt einen Fall, bei welchem in dem Kraftstofftank 10 Unterdruck herrscht, infolge dessen der Kraftstofftank 10 deformiert ist. Die Deformation der Wände 44 des Kraftstofftanks 10 führt dazu, dass eine Winkellage des Arms 20 bezogen auf den Signalgeber 22 eine andere ist als dies bei undeformiertem Kraftstofftank 10 der Fall wäre. Bei einer durch den Unterdruck bedingten Deformation des Kraftstofftanks 10 übermittelt daher gemäß einer ersten Ausführungsform der Signalgeber 22 an das Steuergerät 32 ein Signal, welches mit einer größeren Füllhöhe korrespondiert, als dies bei nicht deformiertem Kraftstofftank 10 der Fall wäre. Eine solche Beziehung der angezeigten Füllhöhe und des tatsächlichen Füllvolumens ist Fig. 5 ,durch eine Ist-Kurve 46 angegeben.

Vorliegend erfasst nun ein Drucksensor 48 den Dampfdruck im Kraftstofftank 10 und übermittelt diesen an das Steuergerät 32. Das Steuergerät 32 verarbeitet das vom Signalgeber 22 abgegebene Signal und das von dem Drucksensor 48 abgegebene Signal, wobei in dem Steuergerät 32 eine Kennlinie abgelegt ist, welche von der Größe der Deformation des Kraftstofftanks 10 abhängige Korrekturwerte angibt. Beispielhaft sind in Fig. 5 einzelne solcher Korrekturwerte durch Pfeile 50 dargestellt. Werte auf der Ist-Kurve 46 werden um die entsprechenden Korrekturwerte korrigiert, so dass der Verlauf der Ist-Kurve 46 sich der Soll-Kurve 24 angleicht.

Bei der durch den Unterdruck bedingten Deformation des Kraftstofftanks (vgl. Fig. 2) kann es je nach Gestalt des Kraftstofftanks 10 und nach Anbringungsort des Signalgebers 22 gegebenenfalls dazu kommen, dass das vom Signalgeber 22 erzeugte Signal eine niedrigere Füllhöhe als die tatsächliche angibt. Eine entsprechende Ist-Kurve 52 ist in Fig. 5 beispielhaft angegeben. Auch hier ermöglichen die Korrekturwerte entsprechend der Pfeile 50 ein Angleichen dieser Ist-Kurve 52 an die Sollkurve 24.

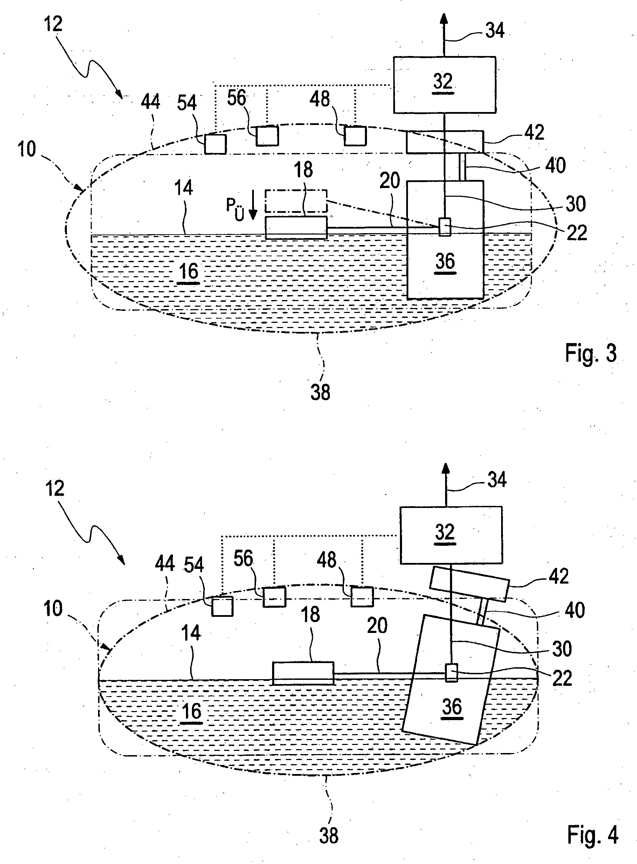

Fig. 3 veranschaulicht einen Fall, bei welchem Überdruck im Kraftstofftank 10 zu einer Deformation desselben führt. Dies führt wiederum zu einer Winkellage des Arms 20 bezogen auf den Signalgeber 22, welche vom Signalgeber 22 in eine niedrigere Füllhöhe umgesetzt wird als sie tatsächlich im Kraftstofftank 10 vorliegt. Als Beispiel für einen solchen Zusammenhang der angezeigten Füllhöhe und des zugehörigen Füllvolumens soll ebenfalls die in Fig. 5 gezeigte Ist-Kurve 52 dienen.

Auch für diesen Fall der Deformation aufgrund von Überdruck sorgt der vom Drucksensor 48 gelieferte Korrekturwert dafür, dass das Steuergerät 32 die Tankanzeige korrekt ansteuert. Mittels der vom Drucksensor 48 an das Steuergerät 32 gelieferten Signale können nämlich anhand einer entsprechenden, im Steuergerät 32 abgelegten Kennlinie die Werte auf der Ist-Kurve 52 um entsprechende Korrekturwerte korrigiert werden und diese so der Soll-Kurve 24 angeglichen werden.

Fig. 4 veranschaulicht schließlich einen Fall, bei welchem eine druckbedingte Deformation des Kraftstofftanks 10 zu einem Verkippen der Fördereinheit 36 und damit des an der Fördereinheit 36 befestigten Signalgebers 22 relativ zu dem Arm 20 führt. Auch hier ermöglicht der Drucksensor 48 eine Korrektur des vom Signalgeber 22 an das Steuergerät ausgegebenen Signals und somit eine korrekte Anzeige des Füllstands.

In einer alternativen Ausführungsform kann ein Drucksensor am Schwimmkörper 18 oder am Signalgeber 22 angeordnet sein. Vorteilhaft ist ein solcher Drucksensor dann über die Signalstrecke 30 mit dem Steuergerät 32 gekoppelt. Dies ermöglicht es nämlich, das elektrische Signal, welches der Signalgeber 22 an das Steuergerät 32 abgibt, bereits zu korrigieren, bevor das Signal das Steuergerät 32 erreicht. Es können auch sowohl der im Kraftstofftank angeordnete Drucksensor 48 als auch der über die Signalstrecke 30 mit dem Steuergerät 32 gekoppelte Drucksensor vorgesehen sein.

Bevorzugt ist des Weiteren ein Temperatursensor 54 vorgesehen, welcher ebenfalls mit dem Steuergerät 32 gekoppelt ist. Hier werden dann aus dem von dem Drucksensor 48 übermittelten Drucksignal und aus dem von dem Temperatursensor 54 ermittelten Temperatursignal Korrekturwerte bestimmt, welcher es ermöglichen, die jeweilige Ist-Kurve 46, 52 zu korrigieren. In alternativen Ausführungsformen kann auch der Temperatursensor 54 in dem Schwimmkörper 18 oder an dem Signalgeber 22 oder an dem Arm 20 angeordnet sein und für das Übermitteln eines korrigierten Signals an das Steuergerät 32 über die Signalstrecke 30 sorgen.

Zusätzlich oder alternativ können Wegaufnehmer 56 vorgesehen sein, welche eine Längenänderung der Wände 44 des Kraftstofftanks 10 aufnehmen und entsprechende Messgrößen an das Steuergerät 32 übermitteln. Das Steuergerät 32 setzt dann diese Messgrößen in entsprechende Korrekturwerte um, welche ein Angleichen der Werte der Ist-Kurven 46, 52 an die Soll-Kurve 24 ermöglichen. Entsprechende Kennlinien, welche das Korrigieren der Ist-Kurven 46, 52 gemäß der Pfeile 50 ermöglichen, geben deformationsabhängige Korrekturwerte an, welche für den jeweiligen Typ des Kraftstofftanks 10 ermittelt sind. Die Kennlinien sind in dem Steuergerät 32 abgelegt.

Wenn gemäß einer weiteren Ausführungsform ein solcher Wegaufnehmer 56 mit der Wand 44 des Kraftstofftanks einerseits und dem Signalgeber 22 oder der Fördereinheit 36 andererseits gekoppelt ist, kann auch ein Kippen der Fördereinheit 36 (vgl. Fig. 4) beim Ansteuern der Tankanzeige durch das Steuergerät 32 berücksichtigt werden, auch wenn das Kippen nicht durch eine Druck- oder Temperaturschwankung im Kraftstofftank 10 bedingt ist.

## Patentansprüche

1. Messeinrichtung zum Ermitteln eines Flüssigkeitsfüllstands (14) in einnem Kraftstofftank (10) für ein Fahrzeug, mit einem Schwimmkörper (18) und einer an dem Kraftstofftank (10) festlegbaren Signalerzeugungseinheit (22), wobei eine Position des Schwimmkörpers (18) relativ zu der Signalerzeugungseinheit (22) in ein Signal umsetzbar ist, das mit dem Füllstand (14) des undeformierten Kraftstofftanks (10) korreliert, und mit einer Korrektureinrichtung (48, 54, 56) zum Korrigieren des Signals, die zum Erfassen einer Deformation des Kraftstofftanks (10) ausgelegt ist, wobei die Korrektureinrichtung (48, 54, 56) zum Erfassen eines Ausmaßes der Deformation oder einer das Ausmaß bestimmenden Größe ausgelegt ist,
**dadurch gekennzeichnet, dass**
die Korrektureinrichtung (48, 54, 56) wenigstens eine der folgenden Komponenten umfasst:
- einen Drucksensor (48) zum Erfassen eines Dampfdrucks im Kraftstofftank (10);
- einen Temperatursensor (54) zum Erfassen einer Temperatur des Kraftstofftanks (10);
- einen Wegaufnehmer (56) zum Erfassen einer Längenänderung der Wände des Kraftstofftanks.

2. Messeinrichtung nach Anspruch 1,
**gekennzeichnet durch**
eine Steuerungseinrichtung (32) zum Ansteuern einer Anzeige, wobei in der Steuerungseinrichtung (32) zumindest eine Kennlinie abgelegt ist, welche wenigstens einen von der Größe der Deformation des Kraftstofftanks (10) abhängigen Korrekturwert zum Korrigieren des Signals der Signalerzeugungseinheit (22) angibt.

3. Messeinrichtung nach Anspruch 2,
**dadurch gekennzeichnet, dass**
der wenigstens eine Drucksensor (48) in dem Kraftstofftank (10) angeordnet und mit der Steuerungseinrichtung (32) gekoppelt ist.

4. Messeinrichtung nach Anspruch 2 oder 3,
**dadurch gekennzeichnet, dass**
der wenigstens eine Drucksensor in die Signalerzeugungseinheit (22) oder in den Schwimmkörper (18) integriert ist, wobei mittels der Signalerzeugungseinheit (22) ein korrigiertes Signal über eine Signalstrecke (30) der Signalerzeugungseinheit (22) an die Steuerungseinrichtung (32) übermittelbar ist.

5. Messeinrichtung nach einem der Ansprüche 1 bis 4,
**dadurch gekennzeichnet, dass**
wenigstens ein Wegaufnehmer (56) mit der Signalerzeugungseinheit (22) einerseits und einer Wand (44) des Kraftstofftanks (10) andererseits gekoppelt ist.

6. Messeinrichtung nach einem der Ansprüche 1 bis 5,
**dadurch gekennzeichnet, dass**
die Korrektureinrichtung (48, 54, 56) zum Korrigieren des Signals bei einer durch einen Überdruck und/oder einen Unterdruck bedingten Deformation des Kraftstofftanks (10) ausgelegt ist.

7. Verfahren zum Ermitteln eines Flüssigkeitsfüllstands (14) in einem Kraftstofftank (10) für ein Fahrzeug, bei welchem eine Signalerzeugungseinheit (22) ein den Flüssigkeitsfüllstand (14) angebendes Signal abgibt, wobei eine Deformation des Kraftstofftanks (10) durch eine Korrektureinrichtung (48, 54, 56) erfasst und aufgrund der erfassten Deformation das Signal korrigiert wird,
wobei die Korrektureinrichtung (48, 54, 56) ein Ausmaß der Deformation oder eine das Ausmaß bestimmende Größe erfasst,
**dadurch gekennzeichnet, dass**
die Korrektureinrichtung (48, 54, 56) wenigstens eine der folgenden Größen erfasst:
- mittels eines Drucksensors (48) einen Dampfdruck im Kraftstofftank (10);
- mittels eines Temperatursensors (54) eine Temperatur des Kraftstofftanks (10);
- mittels eines Wegaufnehmers (56) eine Längenänderung der Wände des Kraftstofftanks.

## Claims

1. Measurement device for determining a fluid fill level (14) in a fuel tank (10) of a vehicle, comprising a float (18) and a signal generating unit (22) adapted to be fixed to the fuel tank (10), wherein a position of the float (18) relative to the signal generating unit (22) can be converted into a signal which correlates with the fill level (14) of the undeformed fuel tank (10), and comprising a correction device (48, 54, 56) for correcting the signal, which is configured to detect a deformation of the fuel tank (10), wherein the correction device (48, 54, 56) is configured to detect the extent of the deformation or a quantity which determines the extent of the deformation,
**characterised in that**
the correction device (48, 54, 56) comprises at least one of the following components:
- a pressure sensor (48) for determining a vapour pressure in the fuel tank (10);
- a temperature sensor (54) for detecting a temperature of the fuel tank (10);
- a travel sensor (56) for detecting a change in length of the walls of the fuel tank.

2. Measurement device according to claim 1, **characterised by** a control device (32) for controlling a display, wherein at least one characteristic curve is stored in the control device (32), which provides at least one correction value which depends on the extent of the deformation of the fuel tank (10), for correcting the signal from the signal generating unit (22).

3. Measurement device according to claim 2, **characterised in that** the at least one pressure sensor (48) is arranged in the fuel tank (10) and is coupled to the control device (32).

4. Measurement device according to claim 2 or 3, **characterised in that** the at least one pressure sensor is integrated in the signal generating unit (22) or in the float (18), wherein a corrected signal can be transmitted to the control device (32) by means of the signal generating unit (22) through a signal path (30) of the signal generating unit (22).

5. Measurement device according to one of claims 1 to 4, **characterised in that** at least one travel sensor (56) is coupled to the signal generating unit (22) on the one hand and to a wall (44) of the fuel tank (10) on the other hand.

6. Measurement device according to one of claims 1 to 5, **characterised in that** the correction device (48, 54, 56) is configured to correct the signal when there is a deformation of the fuel tank (10) caused by an overpressure and/or a negative pressure.

7. Method for determining a fluid fill level (14) in a fuel tank (10) of a vehicle, wherein a signal generating unit (22) emits a signal which indicates the fluid fill level (14), wherein deformation of the fuel tank (10) is detected by a correction device (48, 54, 56) and the signal is corrected on the basis of the deformation detected,
the correction device (48, 54, 56) determining the extent of the deformation or a quantity that determines the extent,
**characterised in that**
the correction device (48, 54, 56) detects at least one of the following quantities:
- a vapour pressure in the fuel tank (10) by means of a pressure sensor (48);
- a temperature of the fuel tank (10) by means of a temperature sensor (54);
- a change in the length of the walls of the fuel tank by means of a travel sensor (56).

## Revendications

1. Dispositif de mesure pour déterminer un niveau de remplissage de liquide (14) dans un réservoir de carburant (10) pour un véhicule, comprenant un flotteur (18) et une unité productrice de signaux (22) qui peut être fixée au réservoir de carburant (10), dans lequel la position du flotteur (18) par rapport à l'unité productrice de signaux (22) peut être convertie en un signal qui est en corrélation avec le niveau (14) du réservoir de carburant non déformé (10), et un dispositif de correction (48, 54, 56) pour corriger le signal, qui est conçu pour détecter une déformation du réservoir de carburant (10), dans lequel le dispositif de correction (48, 54, 56) est conçu pour détecter le degré de déformation ou une grandeur déterminant ledit degré,
**caractérisé en ce que** :
le dispositif de correction (48, 54, 56) comprend au moins l'un des composants suivants :
- un capteur de pression (48) pour détecter la pression de vapeur dans le réservoir de carburant (10) ;
- un capteur de température (54) pour détecter la température du réservoir de carburant (10) ; et
- un capteur de déplacement (56) pour détecter une variation de longueur des parois du réservoir de carburant.

2. Dispositif de mesure selon la revendication 1,
**caractérisé par** :
un dispositif de commande (32) pour commander un affichage, dans lequel dispositif de commande (32) est mémorisée au moins une ligne caractéristique qui délivre au moins une valeur de correction fonction de la grandeur de la déformation du réservoir de carburant (10) pour corriger le signal de l'unité productrice de signaux (22).

3. Dispositif de mesure selon la revendication 2,
**caractérisé en ce que** :
le au moins un capteur de pression (48) est aménagé dans le réservoir de carburant (10) et est couplé au dispositif de commande (32).

4. Dispositif de mesure selon la revendication 2 ou la revendication 3,
**caractérisé en ce que** :
le au moins un capteur de pression est intégré à
l'unité productrice de signaux (22) ou au flotteur (18), dans lequel, au moyen de l'unité productrice de signaux (22), un signal corrigé peut être transmis au dispositif de commande (32) par une voie de signalisation (30) de l'unité productrice de signaux (22).

5. Dispositif de mesure selon l'une quelconque des revendications 1 à 4,
**caractérisé en ce que** :
au moins un capteur de déplacement (56) est couplé,
d'une part, à l'unité productrice de signaux (22) et, d'autre part, à une paroi (44) du réservoir de carburant (10).

6. Dispositif de mesure selon l'une quelconque des revendications 1 à 5,
**caractérisé en ce que** :
le dispositif de correction (48, 54, 56) est conçu
pour corriger le signal dans le cadre d'une déformation du réservoir de carburant (10) conditionnée par une surpression et/ou une dépression.

7. Procédé de détermination d'un niveau de remplissage de liquide (14) dans un réservoir de carburant (10) pour un véhicule, dans lequel une unité productrice de signaux (22) délivre un signal indiquant le niveau de remplissage de liquide (14), dans lequel une déformation du réservoir de carburant (10) est détectée par un dispositif de correction (48, 54, 56) et le signal est corrigé sur la base de la déformation détectée,
dans lequel le dispositif de correction (48, 54, 56) détecte un degré de déformation ou une grandeur déterminant ledit degré,
**caractérisé en ce que** :
le dispositif de correction (48, 54, 56) détecte au moins l'une des grandeurs suivantes :
- au moyen d'un capteur de pression (48), une pression de vapeur dans le réservoir de carburant (10) ;
- au moyen d'un capteur de température (54), la température du réservoir de carburant (10) ; et
- au moyen d'un capteur de déplacement (56), une variation de longueur des parois du réservoir de carburant.
